# EUROPEAN PATENT APPLICATION

(11) **EP 4 715 183 A1**
(43) Date of publication of application: **25.03.2026**
(21) Application number: 25200425.4
(22) Date of filing: 05.09.2025
(51) Int. Cl.: F02C 7/047, F01D 17/08

(54) **GAS TURBINE ENGINE INLET ANTI-ICE SYSTEM**

(30) Priority: 23.09.2024 US 202418892858
(71) Applicant: Honeywell International Inc., Charlotte, NC 28202 (US)
(72) Inventor: BANTA, Paul W., Charlotte, 28202 (US)
(74) Representative: Ingrassia, Fisher & Lorenz UK Ltd.

(57) **Abstract**

A gas turbine engine inlet anti-ice system includes an air supply duct, a flow control valve, a pneumatic valve actuator, and a mechanical thermostat. The air supply duct has an inlet to receive pressurized air, and an outlet coupled to an anti-ice flow duct formed within an inlet portion of a gas turbine engine. The flow control valve is disposed within the air supply duct between the inlet and the outlet and is moveable to a valve position between a closed position and a plurality of open positions. The pneumatic valve actuator is responsive to a pneumatic control pressure to move the flow control valve between the closed position and the plurality of open positions. The mechanical thermostat is responsive to temperature within the anti-ice flow duct to control the pneumatic control pressure, to thereby control the temperature of the air in the anti-ice flow duct.

## Description

### TECHNICAL FIELD

The present disclosure generally relates to aircraft gas turbine engines and, more particularly, to gas turbine engine inlet anti-ice system.

### BACKGROUND

An aircraft gas turbine propulsion engine may be exposed to numerous and varied environmental conditions. For example, the engine may be exposed to various environmental conditions that may result in ice accretion on the engine inlet. Not surprisingly, such accretion can adversely affect engine performance and/or have various other deleterious effects on engine components. Thus, many aircraft include an inlet anti-ice system to prevent ice accretion on the engine inlet.

Some inlet anti-icing systems use pressurized air, which is heated during engine operation, to implement the inlet anti-icing function of the engine. For example, some engines direct the pressurized air, such as bleed air, through a nozzle or set of orifices disposed in the engine inlet and via an upstream pressure regulating valve. These systems are typically designed such that there is sufficient pressurized air flow to prevent ice accretion during the worst-case cold conditions and to limit the pressurized air flow so as to not overheat the engine inlet, system, and structural components during worst-case hot conditions.

Although the above-described inlet anti-ice systems work well, are generally robust, and generally safe, these systems do present some drawbacks. In particular, with the increased use of composite materials and the desire to use aluminum for the lip of the engine inlet, these systems are difficult (if not impossible) to design for the worst-case design extremes.

Hence there is a need for an engine inlet anti-ice system that can meet worst-case design extremes for engines that are designed with composite materials and/or aluminum. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a gas turbine engine inlet anti-ice system includes an air supply duct, a flow control valve, a pneumatic valve actuator, and a mechanical thermostat. The air supply duct has an inlet and an outlet. The inlet is adapted to receive a flow of pressurized air, and the outlet is coupled to an anti-ice flow duct formed within an inlet portion of a gas turbine engine. The flow control valve is disposed within the air supply duct between the inlet and the outlet. The flow control valve is moveable to a valve position between a closed position, in which pressurized air cannot flow from the inlet to the outlet, and a plurality of open positions, in which pressurized air can flow from the inlet to the outlet. The pneumatic valve actuator is coupled to the flow control valve and is responsive to a pneumatic control pressure to move the flow control valve between the closed position and the plurality of open positions. The mechanical thermostat is in fluid communication with the anti-ice flow duct and the pneumatic valve actuator. The mechanical thermostat is responsive to temperature within the anti-ice flow duct to control the pneumatic control pressure, to thereby control the valve position, the flow of pressurized air to the outlet, and thus the temperature of the air in the anti-ice flow duct.

In another embodiment, a gas turbine engine system includes an engine housing, an anti-ice flow duct, and an inlet anti-ice system. The engine housing has an inlet section, a compressor section, a combustion section, a turbine section, and an exhaust section. The anti-ice flow duct is formed in the inlet section and is coupled to receive a flow of pressurized air to provide anti-icing of the inlet section. The inlet anti-ice system is configured to at least selectively supply the flow of pressurized air to the anti-ice flow duct and includes an air supply duct, a flow control valve, a pneumatic valve actuator, and a mechanical thermostat. The air supply duct has an inlet and an outlet. The inlet is adapted to receive a flow of pressurized air, and the outlet is coupled to an anti-ice flow duct formed within an inlet portion of a gas turbine engine. The flow control valve is disposed within the air supply duct between the inlet and the outlet. The flow control valve is moveable to a valve position between a closed position, in which pressurized air cannot flow from the inlet to the outlet, and a plurality of open positions, in which pressurized air can flow from the inlet to the outlet. The pneumatic valve actuator is coupled to the flow control valve and is responsive to a pneumatic control pressure to move the flow control valve between the closed position and the plurality of open positions. The mechanical thermostat is in fluid communication with the anti-ice flow duct and the pneumatic valve actuator. The mechanical thermostat is responsive to temperature within the anti-ice flow duct to control the pneumatic control pressure, to thereby control the valve position, the flow of pressurized air to the outlet, and thus the temperature of the air in the anti-ice flow duct.

In yet another embodiment, a gas turbine engine inlet anti-ice system includes an air supply duct, a shut-off valve, a flow control valve, a pneumatic valve actuator, and a mechanical thermostat. The air supply duct has an inlet and an outlet. The inlet is adapted to receive a flow of pressurized air, and the outlet is coupled to an anti-ice flow duct formed within an inlet portion of a gas turbine engine. The shut-off valve is coupled to the air supplied duct and is disposed upstream of the inlet. The shut-off valve is movable between a closed position, in which the flow of pressurized air is prevented from flowing into the air supply duct, and an open position, in which the pressurized air may flow into the air supply duct;

The flow control valve is disposed within the air supply duct between the inlet and the outlet. The flow control valve is moveable to a valve position between a closed position, in which pressurized air cannot flow from the inlet to the outlet, and a plurality of open positions, in which pressurized air can flow from the inlet to the outlet. The pneumatic valve actuator is coupled to the flow control valve and is responsive to a pneumatic control pressure to move the flow control valve between the closed position and the plurality of open positions. The mechanical thermostat is in fluid communication with the anti-ice flow duct and the pneumatic valve actuator. The mechanical thermostat is responsive to temperature within the anti-ice flow duct to control the pneumatic control pressure, to thereby control the valve position, the flow of pressurized air to the outlet, and thus the temperature of the air in the anti-ice flow duct.

Furthermore, other desirable features and characteristics of the Temperature Controlled Engine Anti Ice System will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a simplified cross-sectional view of one embodiment of a gas turbine propulsion engine;
FIG. 2 depicts one example embodiment of an inlet anti-ice system that may be included in the gas turbine propulsion engine of FIG. 1;
FIG. 3 depicts another example embodiment of an inlet anti-ice system that may be included in the gas turbine propulsion engine of FIG. 1;
FIGS. 4 and 5 depict another example embodiment of an inlet anti-ice system that may be included in the gas turbine propulsion engine of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

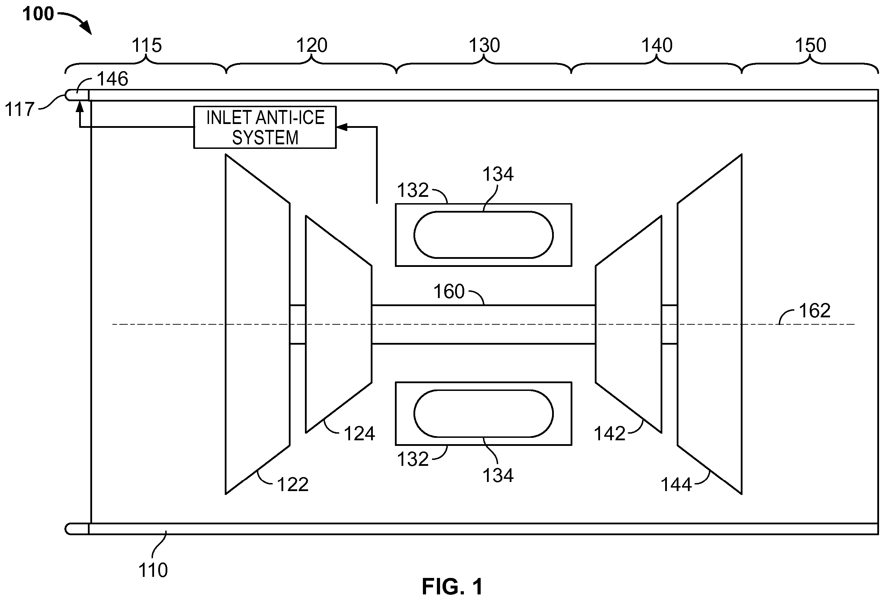

Referring to FIG. 1, a simplified cross-sectional view of one embodiment of a gas turbine propulsion engine 100 is depicted. The engine 100 is disposed in an engine housing 110 and includes an inlet section 115, a compressor section 120, a combustion section 130, a turbine section 140, and an exhaust section 150.

The compressor section 120 and turbine section 140 are operably coupled to a shaft assembly 160 for rotation within the engine housing 110. A fluid (e.g., air) is drawn into the engine housing 110 through the inlet section 115 and into the compressor section 120. The compressor section 120 may be configured as an axial compressor, a centrifugal compressor, or as an axial-centrifugal compressor. In the depicted embodiment, it is configured as an axial-centrifugal compressor and thus includes an axial compressor 122 and a centrifugal compressor 124. Together, these compressors 122, 124 compress, and thus increase the pressure of, the fluid entering the engine 100 and supply the compressed fluid into the combustion section 130.

The combustion section 130 includes a combustor plenum 132 and a combustor 134. The combustor plenum 132 is in fluid communication with the compressor section 120, and it directs the compressed fluid into the combustor 134. In the combustor 134, the compressed fluid is mixed with fuel and is combusted. Hot exhaust fluids are then directed into the turbine section 140.

The hot exhaust fluids expand through, and rotate, the turbine section 140 prior to being exhausted through the exhaust section 150. The turbine section 140 rotates to drive equipment in the engine 100 via rotors or spools concentrically disposed about an axis of rotation 162 within the shaft assembly 160. Specifically, the turbine section 140 may include one or more rotors 142, 144 driven by the expanding hot exhaust fluids to rotate the shaft assembly 160 and drive the axial and centrifugal compressors 122, 124.

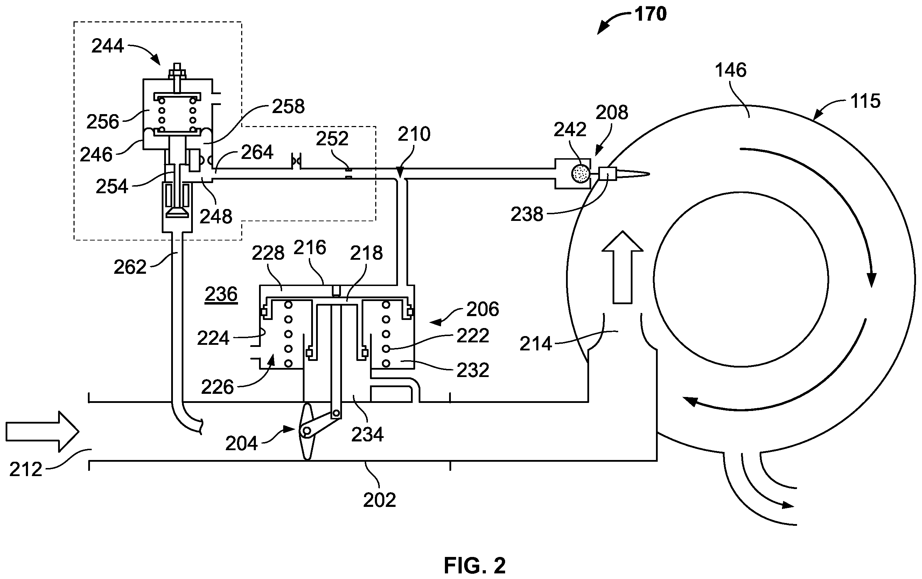

As FIG. 1 also depicts, the inlet section 115 has a leading edge lip 117, around the periphery and an anti-ice flow duct 146 formed therein to receive a flow of pressurized air to provide anti-icing of the inlet section 115, specifically, the leading edge lip 117. The anti-icing system could be comprised of a piccolo tube or a swirling, air mixer. The pressurized air is supplied to the anti-ice flow duct 146 from an inlet anti-ice system 170 that, at least in the depicted embodiment, receives the flow of pressurized air from, for example, a non-illustrated bleed air source within the gas turbine engine 100. Although the configuration of the inlet anti-ice system 170 may vary, a functional schematic diagram of at least a portion of one embodiment of the inlet anti-ice system 170 is depicted in FIG. 2 and, with reference thereto, will now be described.

The depicted engine inlet anti-ice system 170 includes an air supply duct 202, a flow control valve 204, a pneumatic valve actuator 206, and a mechanical thermostat 208. The mechanical thermostat 208 would be mounted in a location that such that it would sense a temperature representative of the desired control. The air supply duct 202 includes an inlet 212 and an outlet 214. The inlet 212 is coupled to receive the flow of pressurized air from, for example, the above-mentioned bleed air system. The outlet 214 is coupled to the anti-ice flow duct 146 that is formed within the inlet section 115 of the gas turbine engine 100. It will be appreciated that although the depicted outlet 214 is configured as a nozzle, in other embodiments it could be configured as a piccolo tube.

The flow control valve 204 is disposed within the air supply duct 202 between the inlet 212 and the outlet 214. The flow control valve 204 is moveable to a valve position between a closed position, which is the position depicted in FIG. 2, and a plurality of open positions. In the closed position, pressurized air cannot flow from the inlet 212 to the outlet 214. However, in any one of the plurality of open positions, pressurized air can flow from the inlet 212 to the outlet 214. As FIG. 2 further depicts, the outlet 214 may be configured as one or more flow nozzles.

The pneumatic valve actuator 206 is coupled to the flow control valve 204. The pneumatic valve actuator 206 is responsive to a pneumatic control pressure 210 to move the flow control valve 204 between the closed position and the plurality of open positions. Although the pneumatic valve actuator 206 may be variously configured to implement its functionality, in the depicted embodiment it includes an actuator housing 216, an actuation device 218, and a spring 222. The actuator housing 216 has an inner surface 224 that defines an actuation chamber 226, within which the actuation device 218 is disposed.

The actuation device 218 is coupled to the flow control valve 204 and divides the actuation chamber 226 into an opening chamber 228, a vent chamber 232, and an optional regulating pressure feedback chamber 234. The opening chamber 228 is in fluid communication with the pneumatic control pressure 210, the vent chamber 232 is in fluid communication with an ambient environment 236 around the actuator housing 216, and the regulating chamber is in fluid communication with the air supply duct 202 downstream of the flow control valve 204.

The spring 222 is disposed within the vent chamber 232 between the actuator housing inner surface 224 and the actuation device 218. The spring 222 is configured such that it supplies a force to the actuation device 218 that urges the flow control valve 204 toward its closed position.

The mechanical thermostat 208 is in fluid communication with the anti-ice flow duct 146 and the pneumatic valve actuator 206. The mechanical thermostat 208 is responsive to temperature within the anti-ice flow duct 146 to control the pneumatic control pressure, to thereby control the position of the flow control valve 204, the flow of pressurized air to the outlet 214, and thus the temperature of the air in the anti-ice flow duct 146. It will be appreciated that the mechanical thermostat 208 may be variously configured to implement its functionality. In the depicted embodiment, however, the mechanical thermostat 208 includes a temperature sensing element 238 and an actuating valve 242. It will additionally be appreciated that although the mechanical thermostat 208 is shown in FIGS. 2-5 as being mounted on, and in fluid communication with, the anti-ice flow duct 146, it could be mounted at various locations to sense a temperature representative of the desired control.

The temperature sensing element 238 selectively expands and contracts in response to the temperature of the air in the anti-ice flow duct 146. The actuating valve 242 is coupled to the temperature sensing element 238 and moves, in response to the expansion and contraction of the temperature sensing element 238, to selectively vent the opening chamber 228 of the of the pneumatic valve actuator 206. The temperature sensing element 238 may be variously configured, but in one embodiment it is comprised of any one of numerous materials (or combinations of materials) that expand and contract with variations in temperature.

As was noted above, the pneumatic valve actuator 206 is responsive to a pneumatic control pressure 210 to move the flow control valve 204 between the closed position and the plurality of open positions. The source of the pneumatic control pressure 210 may itself be variously configured. However, as FIG. 2 further depicts, in one embodiment the source of the pneumatic control pressure 210 includes a pneumatic servo 244. The pneumatic servo 244 is in fluid communication with, and is configured to supply the pneumatic control pressure 210 to, the opening chamber 228 of the pneumatic valve actuator 206.

It will be appreciated that the pneumatic servo 244 may also be variously configured to implement its functionality; however, in the depicted embodiment it includes a housing 246, a control air flow passage 248, a control orifice 252, and a regulator valve element 254. The housing 246 defines at least a first chamber 256 and a second chamber 258. The control air flow passage 248 extends through the housing 246 and has at least an inlet port 262 and an outlet port 264. The control air flow passage inlet port 262 is adapted to receive the pressurized fluid, and the control air flow passage outlet port 264 is in fluid communication with the opening chamber 228 of the pneumatic valve actuator 206 and with the mechanical thermostat 208, via the control orifice 252, which is disposed between the control air flow passage outlet port 264 and the mechanical thermostat 208.

The regulator valve element 254 is disposed within the housing 246 and is movable between a closed position and a plurality of open positions. In the closed position, the control air flow passage inlet port 262 is fluidly isolated from the control air flow passage outlet port 264. Conversely, in any of the plurality of open positions, one of which is depicted in FIG. 2, the control air flow passage inlet port 262 is fluidly coupled to the control air flow passage outlet port 264.

Regardless of how the pneumatic control pressure 210 is specifically implemented, it may be seen that movement of the mechanical thermostat actuating valve 242, in response to expansion and contraction of the temperature sensing element 238, causes variations in the pneumatic control pressure 210 supplied to the opening chamber 228 of the pneumatic valve actuator 206. This, in turn, varies the position of the flow control valve 204, which varies the flow of pressurized air to the outlet 214 of the air supply duct 202, and thus the temperature within the anti-ice flow duct 146.

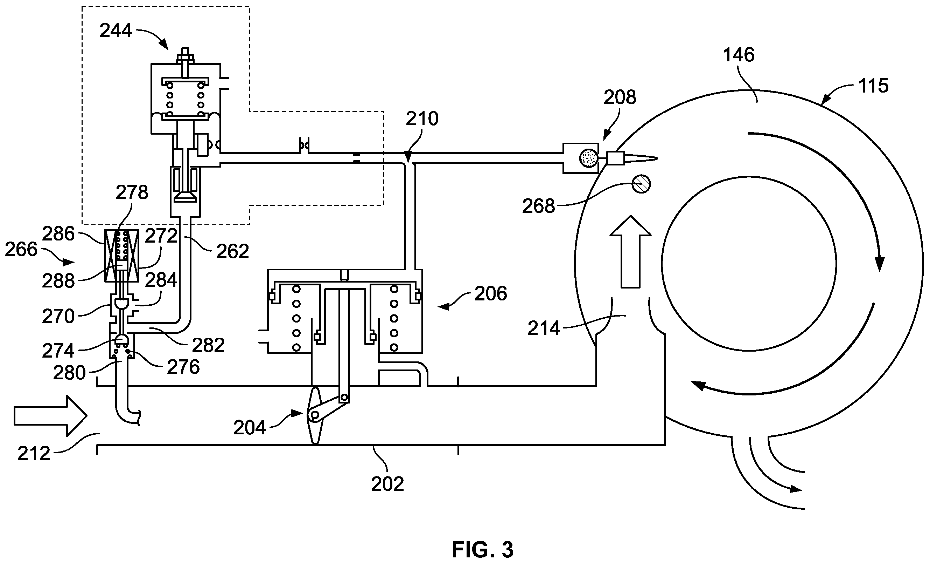

In addition to the above-described devices, components, and systems, the inlet anti-ice system 170 may also, in some embodiments, include a solenoid control valve 266 and/or a temperature sensor 268. The solenoid control valve 266, when included, may be variously configured, but in the embodiment depicted in FIG. 3, the solenoid control valve 266 includes a housing 270, a solenoid 272, a valve 274, a valve bias spring 276, and solenoid bias spring 278. The solenoid control valve housing 270 includes an inlet flow passage 280, an outlet flow passage 282, and a vent port 284. The solenoid control valve housing inlet flow passage 280 is in fluid communication with the air supply duct 202 upstream of the flow control valve 204. The solenoid control valve housing outlet flow passage 282 is in fluid communication with the control air flow passage inlet port 262.

The valve 274 is mounted within the solenoid control valve housing 270 and is movable between a first position and a second position. In the depicted embodiment, the valve 274 is a double ball type valve, though it will be appreciated that this is merely exemplary of a particular preferred embodiment, and that various other types of valves could be used. No matter the particular type of valve used, in the depicted embodiment it is seen that the valve bias spring 276 biases the valve 274 toward the first position (shown in FIG. 3). When the valve 274 is in the first position, the solenoid control valve housing outlet flow passage 282 is fluidly coupled to the vent port 284. When the valve 274 is in the second position, the solenoid control valve housing outlet flow passage 282 is fluidly isolated from the vent port 284, and it is fluidly coupled to the solenoid control valve housing inlet flow passage 280.

The solenoid 272 is coupled to, or mounted within, the actuation control valve housing 270, and includes one or more coils 286, and a movable armature 288. As is generally known, when a solenoid coil 286 is energized, it generates a magnetic force that acts on the armature 288, causing it to move. In the depicted embodiment, the solenoid 272 is configured such that when the solenoid coil 286 is energized, the armature 288 moves the valve 274, against the bias force of both the solenoid bias spring 278 and the valve bias spring 276, to the second position. Thus, when the solenoid 272 is energized, it moves the valve 274 from the first position to the second position, thereby allowing air from the air supply duct 202 to flow through the solenoid control valve 266 and into the control air flow passage inlet port 262.

It will be appreciated that the solenoid control valve 266 could, in other embodiments, be configured opposite to what is described above. That is, it could be configured such that when the solenoid is energized the valve 274 moves from the second position to the first position, and when the solenoid 272 is de-energized the valves moves from the first position to the second position.

The temperature sensor 268, when included, may be implemented using any one of numerous temperature sensing devices. For example, it may be implemented using a thermocouple, a resistance temperature detector (RTD), or a thermistor, just to name a few non-limiting examples. The temperature sensor 268, when included, provides a temperature signal representative of the sensed temperature in the anti-ice flow duct 146. The temperature signal may be used by a non-illustrated system to provide an indication of the temperature within the anti-ice flow duct 146.

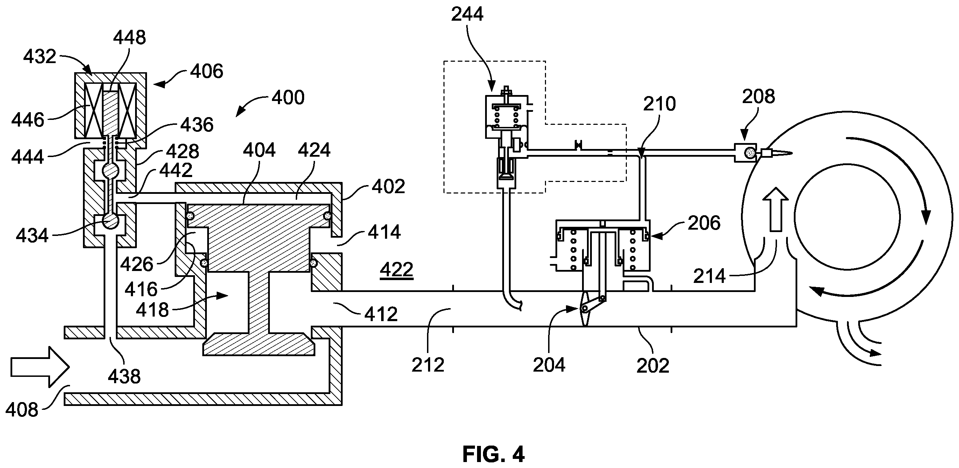

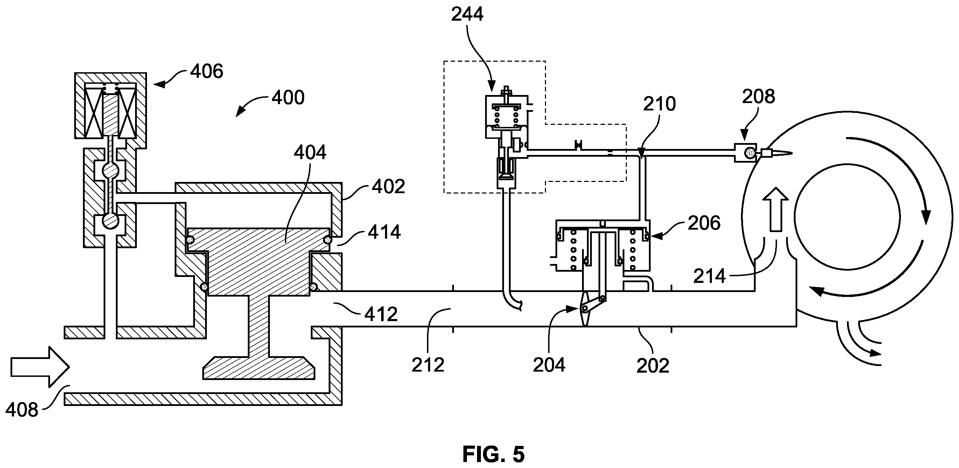

Referring now to FIGS. 4 and 5, it is seen that the inlet anti-ice system 170 may also, in some embodiments, include a shut-off valve 400. The shut-off valve 400, when included, is movable between a closed position and an open position. In the closed position, which is the position depicted in FIG. 4, the pressurized air from, for example, a non-illustrated bleed air source is prevented from flowing into the air supply duct 202. In the open position, which is the position depicted in FIG. 5, the pressurized air from, for example, the non-illustrated bleed air source may flow into the air supply duct 202. It will be appreciated that the shut-off valve 400 may be configured, such that on loss of electrical power, it will either fail to the closed position (FIG. 4) or fail to the open position (FIG. 5).

It will additionally be appreciated that the shut-off valve 400 may be variously configured to implement its functionality. In the depicted embodiment, however, it includes a valve body 402, a valve element 404, and a shut off solenoid control valve 406. The valve body 402 includes an inlet 408, an outlet 412, a vent port 414, and an inner surface 416 that defines a valve chamber 418. The shut-off valve inlet 408 is in fluid communication with the source of pressurized air (e.g., the non-illustrated bleed air source), the shut-off valve outlet 412 is in fluid communication with the air supply duct inlet 212, and the vent port 414 is in fluid communication with an ambient environment 422 around the valve body 402.

The valve element 404, which in the depicted embodiment is implemented using a poppet valve element, is disposed within the valve chamber 418 and divides the valve chamber 418 into an opening chamber 424 and a vent chamber 426. The opening chamber 424 is coupled to selectively receive pressurized air from the shut off solenoid control valve 406, and the vent chamber 426 is in continuous fluid communication with the ambient environment 422 around the valve body 402 via the vent port 414.

The depicted shut off solenoid control valve 406 is configured similar to (but not identical to) the previously described solenoid control valve 266. The shut off solenoid control valve 406 includes a housing 428, a solenoid 432, a valve 434, and solenoid bias spring 436. The actuator valve housing 428 includes an inlet flow passage 438, an outlet flow passage 442, and a vent port 444. The actuator valve housing inlet flow passage 438 is in fluid communication with the source of pressurized air, and the actuator valve housing outlet flow passage 442 is in fluid communication with the opening chamber 424.

The valve 434 is mounted within the actuator valve housing 428 and is movable between a first position and a second position. In the depicted embodiment, the valve 434 is a double ball type valve, though it will be appreciated that this is merely exemplary of a particular preferred embodiment, and that various other types of valves could be used. No matter the particular type of valve used, when the valve 434 is in the first position (when not commanded), as depicted in FIG. 4, the actuator valve housing outlet flow passage 442 is fluidly isolated from the actuator valve housing inlet flow passage 438 and is fluidly coupled to the vent port 444. When the valve 434 is in the second position (when not commanded), as depicted in FIG. 5, the actuator valve housing outlet flow passage 442 is fluidly isolated from the vent port 444 and is fluidly coupled to the actuator valve housing inlet flow passage 438.

The solenoid 432 is coupled to, or mounted within, the actuator valve housing 428, and includes one or more coils 446, and a movable armature 448. In the depicted embodiment of FIG. 4, the solenoid 432 is configured such that when the solenoid coil 446 is energized, the armature 448 moves the valve 434, against the bias force of the solenoid bias spring 436, to the second position. Thus, when the solenoid 432 is energized, it moves the valve 434 from the first position to the second position, thereby allowing pressurized air to flow through the shut off solenoid control valve 406 and into the opening chamber 424, thereby moving the valve element 404 to the open position. FIG. 5 depicts the opposite, such that when the solenoid coil 446 is energized it moves the valve 434 to the first position, allowing the pressure in the opening chamber 424 to escape through the vent port 444, thereby moving the valve element 404 to the closed position.

The inlet anti-ice system described herein can provide adequate anti-ice flow on cold days and meet worst-case hot temperature design extremes for engines that are designed with composite materials and/or aluminum.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A gas turbine engine inlet anti-ice system, comprising:
an air supply duct having an inlet and an outlet, the inlet adapted to receive a flow of pressurized air, the outlet coupled to an anti-ice flow duct formed within an inlet portion of a gas turbine engine;
a flow control valve disposed within the air supply duct between the inlet and the outlet, the flow control valve moveable to a valve position between a closed position, in which pressurized air cannot flow from the inlet to the outlet, and a plurality of open positions, in which pressurized air can flow from the inlet to the outlet;
a pneumatic valve actuator coupled to the flow control valve and responsive to a pneumatic control pressure to move the flow control valve between the closed position and the plurality of open positions; and
a mechanical thermostat in fluid communication with the anti-ice flow duct and the pneumatic valve actuator, the mechanical thermostat responsive to temperature within the anti-ice flow duct to control the pneumatic control pressure, to thereby control the valve position, the flow of pressurized air to the outlet, and thus the temperature of the air in the anti-ice flow duct.

2. The system of claim 1, wherein the pneumatic valve actuator includes:
an actuator housing having an inner surface that defines an actuation chamber;
an actuation device disposed within the actuation chamber and coupled to the flow control valve, the actuation device dividing the actuation chamber into an opening chamber, a vent chamber, and a regulating chamber, the opening chamber in fluid communication with the pneumatic control pressure, the vent chamber in fluid communication with an ambient environment around the actuator housing, the regulating chamber in fluid communication with the air supply duct downstream of the flow control valve; and
a spring disposed within the vent chamber between the actuator housing inner surface and the piston, the spring supplying a force to the piston that urges the flow control valve toward its closed position.

3. The system of claim 2, further comprising:
a pneumatic servo in fluid communication with the opening chamber of the pneumatic actuator and configured to supply the pneumatic control pressure thereto.

4. The system of claim 3, wherein the pneumatic servo comprises:
a housing defining at least a first chamber and a second chamber;
a control air flow passage extending through the housing and having at least an inlet port and an outlet port, the control air flow passage inlet port adapted to receive the pressurized fluid, and the control air flow passage outlet port in fluid communication with the opening chamber of the pneumatic actuator and the mechanical thermostat;
a control orifice disposed between the control air passage outlet port and the mechanical thermostat; and
a regulator valve element disposed within the housing and movable between a closed position, in which the control air flow passage inlet port is fluidly isolated from the control air flow passage outlet port, and a plurality of open positions, in which the control air flow passage inlet port is fluidly coupled to the control air flow passage outlet port.

5. The system of claim 4, wherein the mechanical thermostat comprises:
a temperature sensing element that selectively expands and contracts in response to the temperature of the air in the anti-ice flow duct; and
an actuating valve coupled to the temperature sensing element which moves, in response to expansion and contraction of the temperature sensing element, to thereby selectively vent the opening chamber of the pneumatic valve actuator.

6. The system of claim 2, further comprising:
a solenoid control valve in fluid communication with the pneumatic servo and configured to supply the pneumatic control pressure thereto.

7. The system of claim 6, wherein the solenoid control valve comprises:
an actuation control valve housing having a fluid inlet and a fluid outlet, the fluid inlet coupled to receive a portion of the flow of pressurized air, the fluid outlet in fluid communication with the pneumatic servo; and
an actuation control valve mounted within the actuation control valve housing and moveable between a first position, in which the actuation control valve housing fluid inlet is fluidly isolated from the actuation control valve housing fluid outlet, and a second position, in which the actuation control valve housing fluid inlet is fluidly coupled to the actuation control valve housing fluid outlet, to thereby supply the pneumatic control pressure to the pneumatic servo.

8. The system of claim 1, further comprising:
a shut-off valve coupled to the air supplied duct and disposed upstream of the flow control valve, the shut-off valve movable between a closed position, in which the flow of pressurized air is prevented from flowing into the air supply duct, and an open position, in which the pressurized air may flow into the air supply duct.

9. A gas turbine engine system, comprising:
an engine housing having an inlet section, a compressor section, a combustion section, a turbine section, and an exhaust section;
an anti-ice flow duct formed in the inlet section, the anti-ice flow duct coupled to receive a flow of pressurized air to provide anti-icing of the inlet section; and
an inlet anti-ice system configured to at least selectively supply the flow of pressurized air to the anti-ice flow duct, the inlet anti-ice system comprising:
an air supply duct having an inlet and an outlet, the inlet adapted to receive the flow of pressurized air from the compressor section, the outlet coupled to the anti-ice flow duct;
a flow control valve disposed within the air supply duct between the inlet and the outlet, the flow control valve moveable to a valve position between a closed position, in which pressurized air cannot flow from the inlet to the outlet, and a plurality of open positions, in which pressurized air can flow from the inlet to the outlet;
a pneumatic valve actuator coupled to the flow control valve and responsive to a pneumatic control pressure to move the flow control valve between the closed position and the plurality of open positions; and
a mechanical thermostat in fluid communication with the anti-ice flow duct and the pneumatic valve actuator, the mechanical thermostat responsive to temperature within the anti-ice flow duct to control the pneumatic control pressure, to thereby control the valve position, the flow of pressurized air to the outlet, and thus the temperature of the air in the anti-ice flow duct.

10. The system of claim 9, wherein the pneumatic valve actuator includes:
an actuator housing having an inner surface that defines an actuation chamber;
an actuation device disposed within the actuation chamber and coupled to the flow control valve, the actuation device dividing the actuation chamber into an opening chamber, a vent chamber, and a regulating chamber, the opening chamber in fluid communication with the pneumatic control pressure, the vent chamber in fluid communication with an ambient environment around the actuator housing, the regulating chamber in fluid communication with the air supply duct downstream of the flow control valve; and
a spring disposed within the vent chamber between the actuator housing inner surface and the piston, the spring supplying a force to the piston that urges the flow control valve toward its closed position.

11. The system of claim 10, further comprising:
a pneumatic servo in fluid communication with the opening chamber of the pneumatic actuator and configured to supply the pneumatic control pressure thereto.

12. The system of claim 11, wherein the pneumatic servo comprises:
a housing defining at least a first chamber and a second chamber;
a control air flow passage extending through the housing and having at least an inlet port and an outlet port, the control air flow passage inlet port adapted to receive the pressurized fluid, and the control air flow passage outlet port in fluid communication with the opening chamber of the pneumatic actuator and the mechanical thermostat;
a control orifice disposed between the control air passage outlet port and the mechanical thermostat; and
a regulating valve element disposed within the housing and movable between a closed position, in which the control air flow passage inlet port is fluidly isolated from the control air flow passage outlet port, and a plurality of open positions, in which the control air flow passage inlet port is fluidly coupled to the control air flow passage outlet port.

13. The system of claim 12, wherein the mechanical thermostat comprises:
a temperature sensing element that selectively expands and contracts in response to the temperature of the air in the anti-ice flow duct; and
an actuating valve coupled to the temperature sensing element and moves, in response to expansion and contraction of the temperature sensing element, to thereby selectively vent the opening chamber of the pneumatic valve actuator.

14. The system of claim 10, further comprising:
a solenoid control valve in fluid communication with the pneumatic servo and configured to supply the pneumatic control pressure thereto,
wherein the solenoid control valve comprises:
an actuation control valve housing having a fluid inlet and a fluid outlet, the fluid inlet coupled to receive a portion of the flow of pressurized air, the fluid outlet in fluid communication with the pneumatic servo; and
an actuation control valve mounted within the actuation control valve housing and moveable between a first position, in which the actuation control valve housing fluid inlet is fluidly isolated from the actuation control valve housing fluid outlet, and a second position, in which the actuation control valve housing fluid inlet is fluidly coupled to the actuation control valve housing fluid outlet, to thereby supply the pneumatic control pressure to the pneumatic servo.

15. The system of claim 9, further comprising:
a shut-off valve coupled to the air supplied duct and disposed upstream of the flow control valve, the shut-off valve movable between a closed position, in which the flow of pressurized air is prevented from flowing into the air supply duct, and an open position, in which the pressurized air may flow into the air supply duct.
